# EUROPEAN PATENT APPLICATION

(11) **EP 4 509 913 A1**
(43) Date of publication of application: **19.02.2025**
(21) Application number: 24192455.4
(22) Date of filing: 01.08.2024
(51) Int. Cl.: G02F 1/35

(54) **ELECTRO-OPTICAL DEVICE, LASER DEVICE, AND ELECTRO-OPTICAL DUAL-COMB GENERATOR FOR ACTIVE CONTROL OF DISPERSIVE WAVE**

(30) Priority: 14.08.2023 KR 20230106413
(71) Applicant: Korea Advanced Institute of Science and Technology, Daejeon 34141 (KR)
(72) Inventor: LEE, Hansuek, Daejeon (KR); JANG, Min Seok, Daejeon (KR); SUK, Daewon, Daejeon (KR); PARK, Soobong, Daejeon (KR); ROTERMUND, Fabrian, Daejeon (KR); LEE, Changmin, Daejeon (KR); LEE, Seong Cheol, Daejeon (KR); BAE, Ji Eun, Daejeon (KR)
(74) Representative: Appleyard Lees IP LLP

(57) **Abstract**

Provided are an electro-optical device, a laser device, and an electro-optical dual-comb generator. The electro-optical device includes a waveguide configured to generate a dispersive wave of which a center wavelength is different from a center wavelength of the incident wave of the waveguide, and a wavelength modulator disposed along the waveguide and configured to absorb the incident wave propagating through the waveguide, wherein, as the wavelength modulator absorbs the incident wave, the center wavelength of the dispersive wave changes.

## Description

### CROSS-REFERENCE TO RELATED APPLICATION

This application is based on and claims priority under 35 U.S.C. §119 to Korean Patent Application No. 10-2023-0106413, filed on August 14, 2023, in the Korean Intellectual Property Office, the disclosure of which is incorporated by reference herein in its entirety.

### BACKGROUND

### 1. Field

One or more embodiments relate to electro-optics.

This invention was supported by the Samsung Research Funding & Incubation Center of Samsung Electronics under Project Number SRFC-IT1801-03.

### 2. Description of the Related Art

Supercontinuum is based on a phenomenon in which the spectrum band of an incident pump light becomes very broad based on the unique optical nonlinearity of a waveguide. In general, supercontinuum has a wide spectrum band, but the application range is limited due to a small intensity per unit wavelength. Since a waveguide, once it is created, has a determined structure, a dispersion profile is fixed and thus, a dispersive wave is generated only in specific narrow wavelength bands.

A light source in a wide wavelength band may be created from a constant pump light. In addition, a light source in a narrow wavelength band may be generated from a constant pump light. When measurements in various wavelength bands are required, the light source in the wide wavelength band can cover all corresponding bands, but the intensity per unit wavelength is small. The light source in the narrow wavelength band has a larger intensity per unit wavelength than the light source in the wide wavelength band, but the wavelength band is narrow, and thus, various wavelength bands cannot be scanned in real time. In order to scan various wavelength bands by using the light source in the narrow wavelength band, there is an inconvenience in that the waveguide has to be replaced or the wavelength band of laser needs to be controlled. Lasers that can be controlled in the wavelength band are very expensive and require complex setups and technologies.

### SUMMARY

One or more embodiments include an electro-optical device, a laser device, and an electro-optical dual-comb generator for active control of a dispersive wave.

Additional aspects will be set forth in part in the description which follows and, in part, will be apparent from the description, or may be learned by practice of the presented embodiments of the disclosure.

According to one or more embodiments, there is provided an electro-optical device.

The electro-optical device may include a waveguide configured to generate a dispersive wave of which a center wavelength is different from a center wavelength of the incident wave of the waveguide, and a wavelength modulator disposed along the waveguide and configured to absorb the incident wave propagating through the waveguide, wherein, as the wavelength modulator absorbs the incident wave, the center wavelength of the dispersive wave may change.

The wavelength modulator may be configured to absorb the incident wave at a controllable absorption rate.

The controllable absorption rate of the wavelength modulator may be controlled based on a voltage applied to the wavelength modulator.

The dispersion profile of the waveguide may change according to the controllable absorption rate of the wavelength modulator.

As the controllable absorption rate of the wavelength modulator changes, the refractive index of the waveguide changes, and as the refractive index of the waveguide changes, the dispersion profile of the waveguide may change.

The dispersion profile of the waveguide may change according to the voltage applied to the wavelength modulator.

As the dispersion profile of the waveguide changes, the center wavelength of the dispersive wave may change.

The waveguide may be configured to generate a dispersive wave by using a nonlinear process based on the dispersion profile of the waveguide.

The nonlinear process may include a soliton fission process.

The wavelength modulator may be configured to absorb a part of the incident wave.

The wavelength modulator may include an electro-optical material layer disposed along the waveguide and electrodes electrically connected to the electrode material layer.

The electro-optical material layer may include an electro-optical material for absorbing the incident propagating through the waveguide.

An absorption rate at which the wavelength modulator absorbs the incident wave may change according to the Fermi level of the electro-optical material.

The Fermi level of the electro-optical material may change according to a voltage applied through the electrodes.

The electro-optical material may include at least one of graphene, black phosphorous, molybdenum disulfide (MoS2), and metalloid.

The electro-optical material may include a two-dimensional (2D) material.

A length at which the electro-optical material layer extends in a longitudinal direction of the waveguide, may be shorter than a length of the waveguide.

The waveguide may be configured to generate supercontinuum based on the incident wave.

According to one or more embodiments, there is provided a laser device.

The laser device may include a waveguide configured to generate a dispersive wave of which a center wavelength is different from a center wavelength of the incident wave of the waveguide, and a wavelength modulator disposed along the waveguide and configured to absorb the incident wave propagating through the waveguide, wherein, as the wavelength modulator absorbs the incident wave, the center wavelength of the dispersive wave may change.

The pulse laser source may be configured to generate a pulse wave from a continuous pump wave.

According to one or more embodiments, there is provided an electro-optical dual-comb generator.

The electro-optical dual-comb generator may include a first laser device configured to generate a first dispersive wave and a second laser device configured to generate a second dispersive wave, wherein the first laser device includes a first pulse laser source configured to emit a first pulse wave in a first time period, a first waveguide configured to receive a first pulse wave as a first incident wave and to generate a first dispersive wave of which a center wavelength is different from a center wavelength of the first incident wave, and a first waveguide configured to receive the first pulse wave as a first incident wave and to generate the first dispersive wave of which a center wavelength is different from a center wavelength of the first incident wave, and a first wavelength modulator disposed along the first waveguide and configured to absorb a first incident wave passing through the first waveguide, and the second laser device includes a second pulse laser source configured to emit a second pulse wave in a second time period, a second waveguide configured to receive a second pulse wave as a second incident wave and to generate a second dispersive wave of which a center wavelength is different from a center wavelength of the second incident wave, and a second waveguide configured to receive the second pulse wave as a second incident wave and to generate the first dispersive wave of which a center wavelength is different from a center wavelength of the second incident wave, and a second wavelength modulator disposed along the second waveguide and configured to absorb a second incident wave passing through the first waveguide, and as the first wavelength modulator absorbs the first incident wave, the center wavelength of the first dispersive wave changes, and as the second wavelength modulator absorbs the second incident wave, the center wavelength of the second dispersive wave may change.

The first time period and the second time period may be different from each other.

### BRIEF DESCRIPTION OF THE DRAWINGS

The above and other aspects, features, and advantages of certain embodiments of the disclosure will be more apparent from the following description taken in conjunction with the accompanying drawings, in which:
FIGS. 1A through 1C are diagrams for describing a dispersive wave in a fixed wavelength band, according to embodiments;
FIG. 2 is a block diagram of an electro-optical device according to an embodiment;
FIGS. 3A and 3B illustrate an electro-optical device according to an embodiment;
FIG. 4 illustrates an electro-optical device according to an embodiment;
FIGS. 5A and 5B are diagrams for describing features of an electro-optical material according to embodiments;
FIG. 6 is a block diagram of a laser device according to an embodiment;
FIG. 7 is a block diagram of an electro-optical dual-comb generator according to an embodiment;
FIG. 8 illustrates first and second optical frequency combs according to an embodiment; and
FIGS. 9A through 9C are diagrams for describing changes in wavelength bands of a dispersive wave, according to embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Various embodiments of the present disclosure are described with reference to the accompanying drawings.

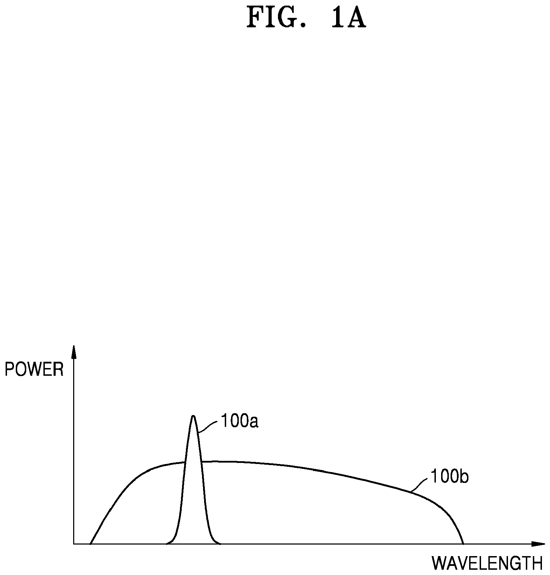

FIGS. 1A through 1C are diagrams for describing a dispersive wave in a fixed wavelength band, according to embodiments.

In a supercontinuum process, supercontinuum 100b and 100c with an extended spectrum from an incident wave 100a are generated based on nonlinear optics. In the supercontinuum process, a dispersive wave 100d is generated based on the dispersion of a medium.

In a soliton fission process due to the nonlinearity of the medium, a dispersive wave is generated. Soliton generated while the nonlinearity and abnormal dispersion of the medium are balanced, is propagated through the medium and is compressed. When perturbation, such as high-order dispersion, two photon absorption, and Raman effect, acts on the soliton, which is unstable due to compression, the soliton is split into several small solitons across a large wavelength band. In such a soliton fission process, energy is transmitted to a wavelength band that satisfies phase matching conditions with an incident wave 100a, and thus, the dispersive wave 100d is generated.

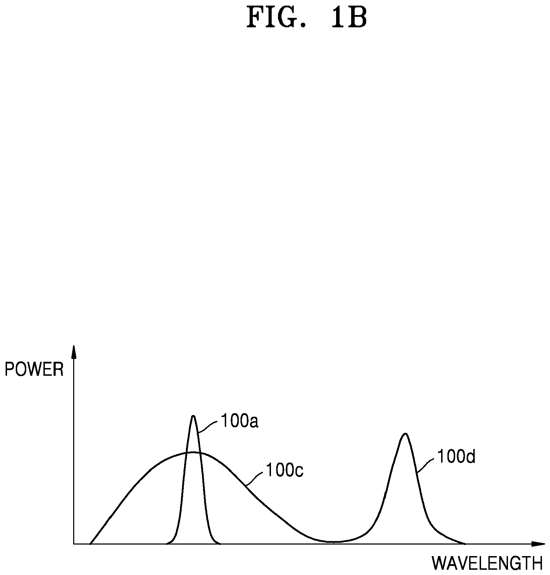

FIG. 1A illustrates a supercontinuum 100b generated in a large wavelength band, and FIG. 1B illustrates a supercontinuum 100c accompanying the dispersive wave 100d generated in a specific wavelength band. Since the supercontinuum 100b is dispersed in a wavelength band with a wide energy, there is a limit that the energy is not concentrated in the specific wavelength band. On the other hand, in the supercontinuum 100c, energy may be concentrated on the specific wavelength band with the generated dispersive wave 100d.

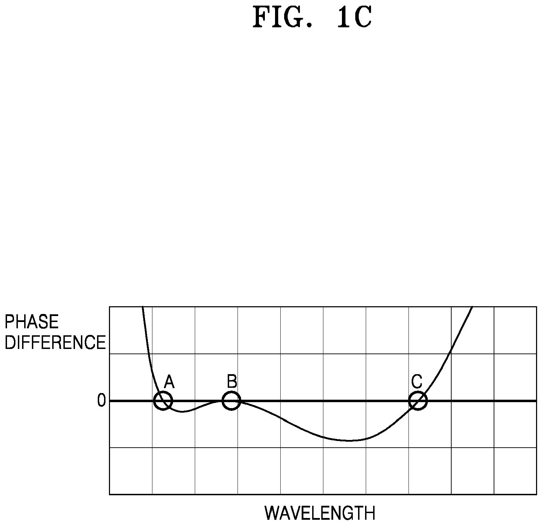

FIG. 1C shows a phase difference between the incident wave 100a and waves in other wavelength bands in the medium. The dispersive wave 100d is generated in a wavelength band that satisfies phase matching conditions with the incident wave 100a based on the dispersion profile of the medium. In an embodiment, the dispersive wave 100d represents the dispersive wave 100d generated in a wavelength band C among wavelength bands A and C that are phase-matched to a wavelength band B of the incident wave 100a.

When the medium is manufactured once, the medium has a fixed dispersion profile, so that a wavelength band in which the dispersive wave 100d is generated, is fixed. Thus, in order to change the wavelength band of the dispersive wave 1 00d, the medium needs to be replaced or the wavelength band, pulse width, or power of the incident wave 100a needs to be changed.

In the present disclosure, embodiments in which the wavelength band of the dispersive wave may be changed without replacing the medium or changing characteristics such as the pulse width or power of the incident wave, are provided. An electro-optical device, a laser device, and an electro-optical dual-comb generator according to embodiments are configured to actively control a wavelength band of a dispersive wave. Hereinafter, embodiments of the electro-optical device, the laser device, and the electro-optical dual-comb generator will be described.

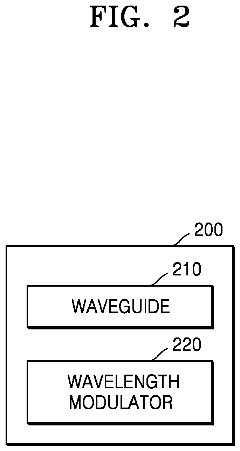

FIG. 2 is a block diagram of an electro-optical device 200 according to an embodiment.

The electro-optical device 200 may include a waveguide 210 and a wavelength modulator 220.

The waveguide 210 is a passage of electromagnetic waves. The waveguide 210 is configured to receive an incident wave and to emit an outgoing wave.

The waveguide 210 is a nonlinear medium. In more detail, the waveguide 210 is a nonlinear medium on which supercontinuum may be generated.

The waveguide 210 is configured to generate a dispersive wave. The dispersive wave may be generated in wavelength bands that satisfy phase matching conditions with the incident wave. In some embodiments, the wavelength band of a dispersive wave may be completely different from the wavelength band of incident wave. In some embodiments, a part of the wavelength band of the dispersive wave may be different from the wavelength band of the incident wave.

A nonlinear process based on the dispersion profile of the waveguide 210 leads generation of a dispersive wave. In the nonlinear process, the soliton fission process contributes to generate a dispersive wave. Energy may be split into a specific wavelength band from the soliton based on the dispersion profile of the waveguide 210, that is, nonlinearity and dispersion, so that a dispersive wave may be generated.

The wavelength modulator 220 is configured to absorb an incident wave propagating through the waveguide 210. The wavelength modulator 220 may absorb the incident wave propagating through the waveguide 210 with different absorption rates according to wavelengths. The wavelength modulator 220 may absorb a part of the incident wave propagating through the waveguide 210. As the wavelength modulator 220 absorbs the incident wave, the wavelength band of the dispersive wave may be changed. That is, as the wavelength modulator 220 absorbs the incident wave, the center wavelength of the dispersive wave may be changed.

In nonlinear optics, according to Kramers-Kronig relations, changes in absorption are associated with changes in refractive index. Thus, when electricity is applied to the wavelength modulator 220, the absorption rate of the waveguide 210 changes according to wavelengths, which changes the refractive index of the waveguide 210 according to wavelengths. The changed refractive index changes the dispersion profile of the waveguide 210, and the changed dispersion profile changes the wavelength band that satisfies phase matching conditions with an incident wave, that is, a wavelength band in which the dispersive wave is generated. Thus, when the wavelength modulator 220 absorbs the incident wave, the wavelength band of the dispersive wave may be changed.

The wavelength modulator 220 may absorb an incident wave at a controllable absorption rate. Since the absorption rate of the wavelength modulator 220 determines changes in the wavelength band of the dispersive wave, the controllable absorption rate of the wavelength modulator 220 enables a dispersive wave to be generated in a desired wavelength band.

The controllable absorption rate of the wavelength modulator 220 may be controlled by a voltage applied to the wavelength modulator 220. The wavelength modulator 220 may include an electro-optical material for absorbing the incident wave propagating through the waveguide 210. Depending on the applied voltage, the Fermi level of the electro-optical material changes, and the absorption rate at which the electro-optical material absorbs the incident wave according to the changed Fermi level, may be changed. Accordingly, the absorption rate of the electro-optical material, that is, the absorption rate of the wavelength modulator 220, may be changed based on the voltage applied to the wavelength modulator 220.

When the absorption rate of the wavelength modulator 220 changes according to the voltage applied to the wavelength modulator 220, the dispersion profile of the waveguide 210 changes, and when the dispersion profile of the wave 210 changes, the wavelength band of the dispersive wave may be changed. Thus, the voltage applied to the wavelength modulator 220 may be controlled so that the wavelength band of the dispersive wave may be controlled. That is, the voltage applied to the wavelength modulator 220 may be controlled so that the center wavelength of the dispersive wave may be controlled
Since the dispersion profile of the waveguide 210 can be changed from the electro-optical device 200, the wavelength band (or the center wavelength) of the dispersive wave can be changed without replacing the waveguide 210 or changing the wavelength band of the incident wave. In addition, depending on the voltage applied to the wavelength modulator 220 in the electro-optical device 200, the dispersion profile of the waveguide 210 may be immediately changed. Accordingly, the wavelength band (or the center wavelength) of the dispersive wave may be controlled in real time.

In some embodiments, the electro-optical device 200 may further include a processor for controlling the voltage applied to the wavelength modulator 220.

In some embodiments, the electro-optical device 200 may further include a voltage source for applying a voltage to the wavelength modulator 220.

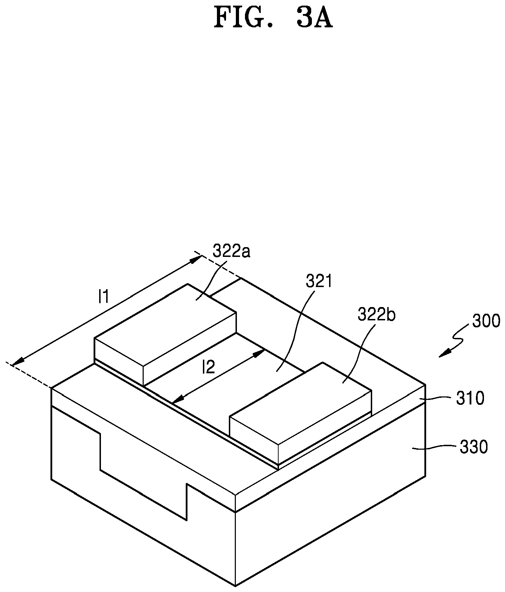

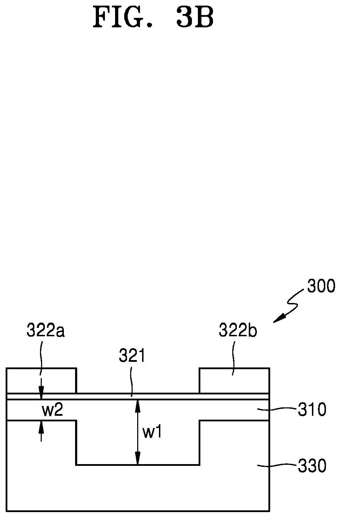

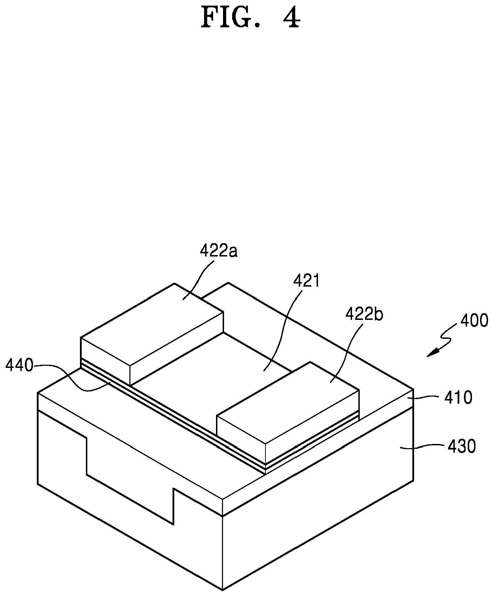

The electro-optical device 200 may have any structure that satisfies the description of FIG. 2. Hereinafter, embodiments of the structure of the electro-optical device 200 will be described with reference to FIGS. 3A, 3B, and 4. The embodiments of FIGS. 3A, 3B, and 4 are some examples of structures of the electro-optical device 200, and the structure of the electro-optical device 200 is not limited thereto.

FIGS. 3A and 3B illustrate an electro-optical device 300 according to an embodiment.

In the present disclosure, the electro-optical device 300 may be configured to change the wavelength band of the dispersive wave as the voltage applied to the wavelength modulator changes. In more detail, as the absorption rate of the wavelength modulator according to wavelengths changes, the wavelength band of the dispersive wave may be changed. That is, as the absorption rate of the wavelength modulator according to wavelengths changes, the center wavelength of the dispersive wave may be changed.

The electro-optical device 300 includes a waveguide 310, a wavelength modulator, and a support layer 330. The wavelength modulator includes an electro-optical material layer 321 and electrodes 322a and 322b.

The waveguide 310 may be arranged on the support layer 330. The support layer 330 may include an electrical insulating material.

The waveguide 310 may be configured to provide a passage through which the incident wave propagates. The incident wave may propagate in a longitudinal direction of the waveguide 310. FIG. 3B is a front view of the electro-optical device 300, and in FIG. 3B, a direction from the front to the rear represents the longitudinal direction of the waveguide 310.

The waveguide 310 may include a thick portion and a thin portion. A thickness w1 of the thick portion may be greater than a thickness w2 of the thin portion. The thick portion may be placed at the center of the waveguide 310, and the thin portion may be placed at the edge of the waveguide 310.

The wavelength modulator may be disposed along the waveguide 310. In more detail, the electro-optical material layer 321 may be disposed along the waveguide 310.

The electro-optical material layer 321 may be disposed along at least a part of the waveguide 310. In other words, the electro-optical material layer 321 may be arranged on at least a part of an upper surface of the waveguide 310.

A length I2 at which the electro-optical material layer 321 extends in the longitudinal direction of the waveguide 310, may be shorter than a length I1 of the waveguide 310. Thus, the incident wave propagating through the waveguide 310 may be prevented from being excessively absorbed by the electro-optical material layer 321.

In FIGS. 3A and 3B, a length at which the electro-optical material layer 321 extends in a transverse direction of the waveguide 310, may be the same as a transverse length of the waveguide 310. Here, the transverse direction of the waveguide 310 means a direction from the left to the right in FIG. 3B. The length at which the electro-optical material layer 321 extends in the transverse direction of the waveguide 310, and the transverse length of the waveguide 310 are not limited to the embodiments of FIGS. 3A and 3B. In some embodiments, the length at which the electro-optical material layer 321 extends in the transverse direction of the waveguide 310, may be shorter than the transverse length of the waveguide 310. Thus, the electro-optical material layer 321 may be concentratively arranged on the thick portion of the center of the waveguide 310.

The electro-optical material layer 321 may include an electro-optical material. The electro-optical material may absorb the incident wave propagating through the waveguide 310.

Electrodes 322a and 322b may be electrically connected to the electro-optical material layer 321. A voltage source may be electrically connected to the electrodes 322a and 322b, and a voltage may be applied to the electro-optical material layer 321 through the electrodes 322a and 322b.

The voltage applied to the electro-optical material layer 321 may change the Fermi level of the electro-optical material. An absorption rate at which the electro-optical material absorbs the incident wave, may be changed according to the Fermi level of the electro-optical material. The dispersion profile of the waveguide 310 may be changed according to the absorption rate of the electro-optical material, and the wavelength band of the dispersive wave may be changed according to the dispersion profile of the waveguide 310. Thus, the center wavelength of the dispersive wave may be changed according to the voltage applied to the electro-optical material layer 321.

The waveguide 310 may include a dielectric material. Thus, even when a voltage is applied to the electro-optical material layer 321, a current may not flow through the waveguide 310.

In the present disclosure, the electro-optical device 300 may use a wavelength modulator so as to change the wavelength band (or the center wavelength) of the dispersive wave, and the wavelength modulator may be manufactured in a smaller size than the waveguide 310. Thus, the electro-optical device 300 may be manufactured in a small size. For example, the electro-optical device 300 may be manufactured in µm to m scales.

Of course, in the present disclosure, the electro-optical device 300 may be manufactured in mm scale or more. For example, the electro-optical device 300 may be manufactured in cm scale or more.

FIG. 4 illustrates an electro-optical device 400 according to an embodiment.

The electro-optical device 400 is different from the electro-optical device 300 of FIG. 3 in that the electro-optical device 400 further includes an electrical insulating layer 440. A redundant description with the electro-optical device 300 in the description of the electro-optical device 400 will be omitted.

The electro-optical device 400 may include a waveguide 410, a wavelength modulator, a support layer 430, and an electrical insulating layer 440. The wavelength modulator may include an electro-optical material layer 421 and electrodes 422a and 422b.

If necessary, the electro-optical device 400 may include the electrical insulating layer 440. For example, when the waveguide 410 includes a conductive material, the electro-optical device 400 may require the electrical insulating layer 440.

The electrical insulating layer 440 may be arranged between the wavelength modulator and the waveguide 410. In more detail, the electrical insulating layer 440 may be arranged between the electro-optical material layer 421 and the waveguide 410. Thus, even when a voltage is applied to the electro-optical material layer 421 through the electrodes 422a and 422b, a current may not flow through the waveguide 410.

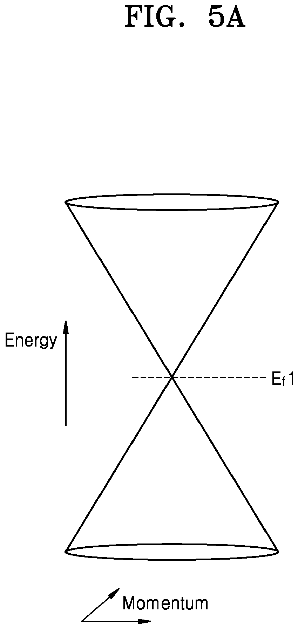

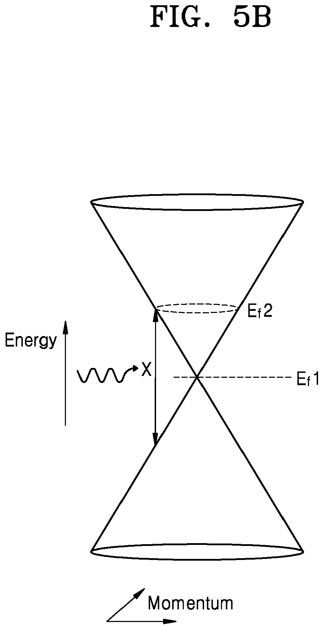

FIGS. 5A and 5B are diagrams for describing features of an electro-optical material according to embodiments.

In the electro-optical device, the electro-optical material layer (321 of FIGS. 3A and 3B and 421 of FIG. 4) may include an electro-optical material. The electro-optical material may absorb the incident wave propagating through a waveguide.

FIGS. 5A and 5B illustrate examples of a structure of an energy band of a two-dimensional (2D) electro-optical material included in the electro-optical material layer.

Referring to FIG. 5A, the Fermi level (i.e., Fermi energy) of the electro-optical material may be at Ef1, i.e., at Dirac point. When the electro-optical material absorbs photons, electron-holes are generated, and since an energy band in which electrons are distributed, is not limited by the Fermi-level Ef1 of the electro-optical material, the energy band in which electro-holes may be generated, is not limited. Thus, the electro-optical material may absorb light in all wavelength bands.

Referring to FIG. 5B, the Fermi level of the electro-optical material may be increased from Ef1 to Ef2 when a voltage is applied to the electro-optical material. When the Fermi level is increased, due to a Pauli Blocking phenomenon, the energy band in which electron-holes may be generated, is limited according to the absorption of photons. Thus, the electro-optical material may absorb only light in a specific wavelength band.

The electro-optical material according to embodiments of the present disclosure may have the characteristics in which the Fermi level changes according to the applied voltage. The Pauli blocking phenomenon due to changes in Fermi energy limits the wavelength band of light that may be absorbed, so that the light absorption rate of electro-optical material may be changed. For example, the voltage applied to the electro-optical material is increased so that the the light absorption rate of the electro-optical material may be reduced.

From the characteristics of the above-mentioned electro-optical material, by changing the voltage applied to the electro-optical material, the Fermi level of the electro-optical material can be changed, the changed Fermi level can change the absorption rate at which the electro-optical material absorbs the incident wave propagating through the waveguide, the dispersion profile of the waveguide can be changed due to the changed absorption rate, and the wavelength band (or the center wavelength) of the dispersion wave can be changed due to the changed dispersion profile. Thus, by controlling the voltage applied to the electro-optical material, the wavelength band (or the center wavelength) of dispersive wave emitted from the waveguide may be controlled.

When the explanation referring to FIGS. 5A and 5B is satisfied, the electro-optical material may be any substance.

Alternatively, the electro-optical material may be a substance having different energy band structures from those of FIGS. 5A and 5B.

In the embodiments of the present disclosure, the electro-optical material may include at least one of graphene, black phosphorus, molybdenum disulfide (MoS2), and metalloid.

In embodiments of the present disclosure, the electro-optical material may include a 2D material, i.e., a single-layer material.

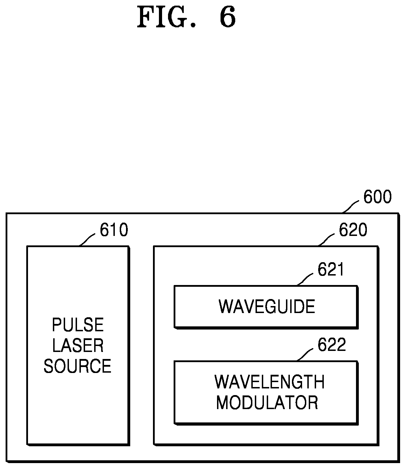

FIG. 6 is a block diagram of a laser device 600 according to an embodiment.

The laser device 600 includes a pulse laser source 610 and an electro-optical device 620. The electro-optical device 620 may include a waveguide 621 and a wavelength modulator 622. The description of the above-described embodiments may be applied to the electro-optical device 620, and a redundant description therewith will be omitted.

The pulse laser source 610 is configured to generate a pulse wave. The pulse laser source 610 may be configured to directly generate a pulse wave or to generate a pulse wave from a continuous pump wave. In the latter case, the pulse laser source 610 may include a continuous wave laser source for generating a continuous pump wave, and a wave modulator for converting a continuous pump wave into a pulse wave. In the latter case, the pulse laser source 610 may include small components, such as a continuous wave diode laser and a waveguide laser.

The pulse wave generated by the pulse laser source 610 may be provided to the electro-optical device 620. The pulse wave may be an incident wave of the waveguide 621 and may be used to generate a dispersive wave.

In some embodiments, the laser device 600 may further include a processor for controlling a voltage applied to the wavelength modulator 622 and/or a pulse wave of the pulse laser source 610.

In some embodiments, the electro-optical device 600 may further include a voltage source for applying a voltage to the wavelength modulator 622.

In the present disclosure, since the pulse laser source 610 and the electro-optical device 620 may include small components, the laser device 600 may be manufactured in a small size.

In the present disclosure, since the electro-optical device and the laser device may control the wavelength band of a dispersive wave, various atoms or molecules in various wavelength bands may be scanned and measured in real time. For example, by scanning and measuring an absorption band in a fundamental vibrational mode of molecules using a dispersive wave, the scanned molecules may be identified, or the characteristics of the scanned molecules such as pressure, density, structure, and dynamics, may be accurately measured.

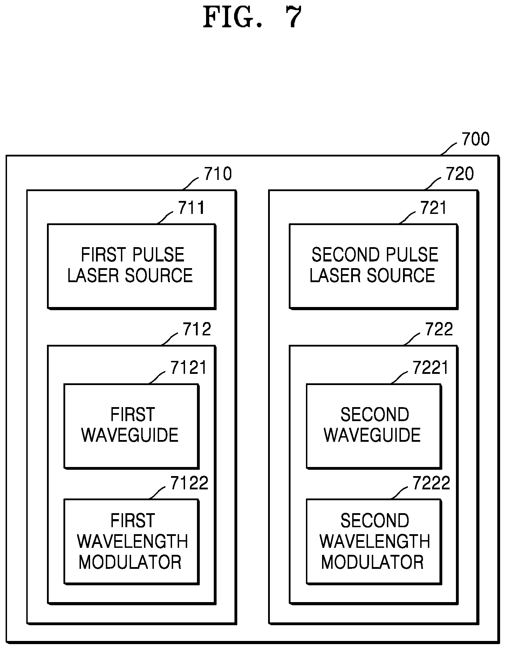

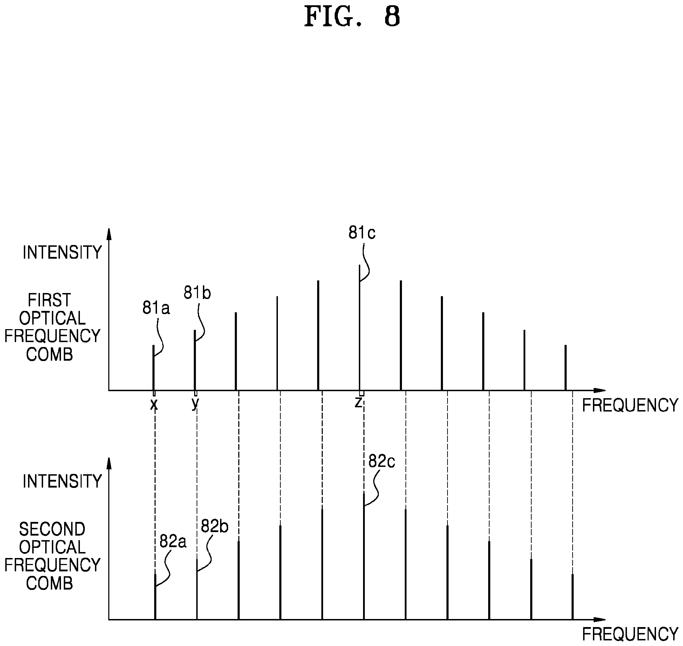

The electro-optical device and the laser device provided by the present disclosure may be used for an optical frequency comb (OFC). The OFC is a sequence of uniformly spaced laser pulses in a frequency domain and is used to accurately measure the frequency or time of light. A dispersive wave of the electro-optical device and the laser device may be a pulse wave, and sequences of laser pulses may be generated by using the dispersive wave. In the present disclosure, among embodiments for an OFC, an embodiment of a dual-comb spectroscopy (DCS) will be described with reference to FIGS. 7 and 8.

FIG. 7 is a block diagram of an electro-optical dual-comb generator 700 according to an embodiment. FIG. 8 illustrates first and second optical frequency combs according to an embodiment.

The electro-optical dual-comb generator 700 may include a first laser device 710 and a second laser device 720. The first laser device 710 may include a first pulse laser source 711 and a first electro-optical device 712. The first electro-optical device 712 may include a first waveguide 7121 and a first wavelength modulator 7122. The second laser device 720 may include a second pulse laser source 721 and a second electro-optical device 722. The second electro-optical device 722 may include a second waveguide 7221 and a second wavelength modulator 7222. The descripiton referring to FIG. 6 may be applied to the first and second laser devices 710 and 720, and the description of the above-described embodiments may be applied to the first and second electro-optical devices 712 and 722, and a redundant description therewith will be omitted.

A first OFC and a second OFC having a sequence of uniformly spaced laser pulses in the frequency domain in a DCS may be used. A separation distance between laser pulses of the first OFC may be different from a separation distance between laser pulses of the second OFC. Thus, a frequency difference between the laser pulses of the first OFC and the laser pulses of the second OFC may be linearly increased.

For example, when the frequency difference between a first laser pulse 81a of the first OFC and a first laser pulse 82a of the second OFC is x, a frequency difference between an n-th laser pulse of the first OFC and an n-th laser pulse of the second OFC may be nx. A frequency difference y between a second laser pulse 81b of the first OFC and a second laser pulse 82b of the second OFC may be 2x, and a frequency difference z between a sixth laser pulse 81c of the first OFC and a sixth laser pulse 82c of the second OFC may be 6x.

A dispersive wave of the first laser device 710 may generate a first OFC. The first pulse laser source 711 may generate a first pulse wave in a first time period, and the first electro-optical device 712 may generate a first dispersive wave from the first pulse wave, and thus, the first OFC having a first frequency distance may be generated.

Similarly, a dispersive wave of the second laser device 720 may generate a second OFC. The second pulse laser source 721 may generate a second pulse wave in a second time period, and the second electro-optical device 722 may generate a second dispersive wave from the second pulse wave, and thus, the second OFC having a second frequency distance may be generated. Here, the second time period may be different from the first time period. Thus, the second frequency difference of the second OFC may be different from the first frequency difference of the first OFC.

A frequency difference between the first OFC and the second OFC may be converted into an electrical signal by using an electronic device such as a light detector. The electronic device may measure a frequency of light based on the electrical signal.

In some embodiments, the electro-optical device 700 may further include a processor for controlling voltages applied to the first and second wave modulators 7122 and 7222 and/or pulse waves of the first and second pulse laser sources 711 and 721.

In some embodiments, the electro-optical dual-comb generator 700 may further include a voltage source for applying voltages to the first and second wavelength modulators 7122 and 7222.

In the present disclosure, the electro-optical dual-comb generator 700 includes laser devices and electro-optical devices and thus may be manufactured in a small size.

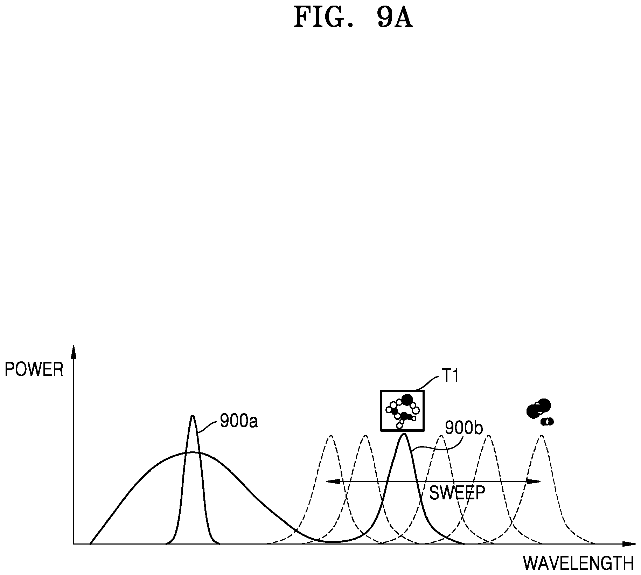

FIGS. 9A through 9C are diagrams for describing changes in a wavelength band of a dispersive wave according to embodiments.

The electro-optical device, the laser device, and the electro-optical dual-comb generator according to embodiments are configured to control a voltage applied to a wavelength modulator so as to change a wavelength band (or a center wavelength) of a dispersive wave. The electro-optical device, the laser device, and the electro-optical dual-comb generator of the present disclosure may be configured to generate a dispersive wave in various wavelength band according to applications. For example, the electro-optical device, the laser device, and the electro-optical dual-comb generator of the present disclosure may generate a dispersive wave of a microwave band for atomic clocks or may generate a dispersive wave of an ultraviolet band so as to analyze nucleus of atoms.

Hereinafter, referring to FIGS. 9A through 9C, an example in which a wavelength band of a dispersive wave is changed in a mid-infrared band so as to measure molecules among various applications, will be described with reference to FIGS. 9A through 9C.

Referring to FIG. 9A, in order to measure first target molecules T1, a dispersive wave 900b having a wavelength band corresponding to an absorption band of the first target molecules T1 may be generated based on embodiments of the present disclosure. By controlling the voltage applied to the wavelength modulator, the absorption rate of the incident wave 900a passing through the waveguide is changed, so that a dispersive wave 900b may be generated in a desired wavelength band.

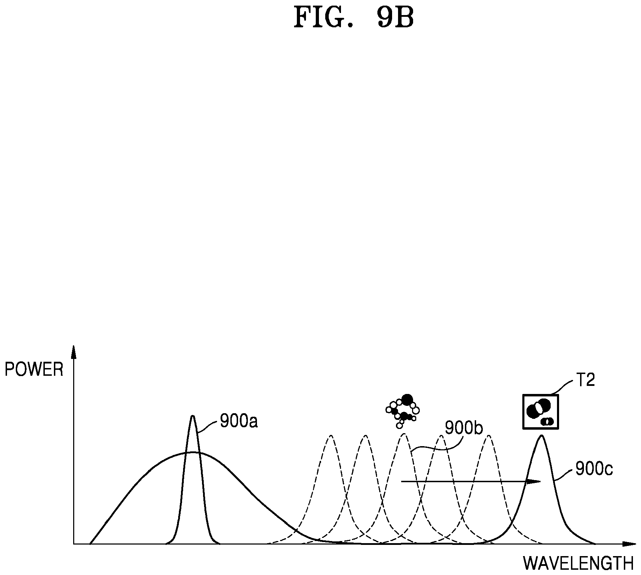

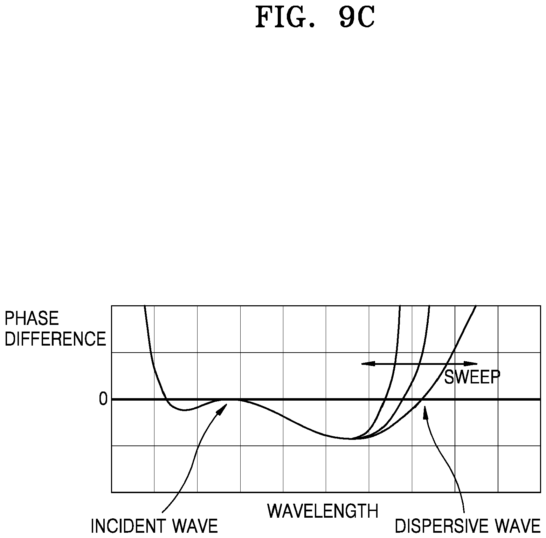

Referring to FIGS. 9B and 9C, in order to measure second target molecules T2 having a different absorption line from the first target molecules T1, a voltage applied to the wavelength modulator may be controlled so that a wavelength band that satisfies phase matching conditions with the incident wave 900a may be changed. Thus, a dispersive wave 900c having a wavelength band corresponding to the absorption band of the second target molecules T2 may be generated.

The first target molecules T1 may be measured by the dispersive wave 900b having a corresponding wavelength band, and the second target molecules T2 may be measured by the dispersive wave 900c having a corresponding wavelength band. According to the embodiments of the present disclosure, since the wavelength band of a dispersive wave may be controlled by the applied voltage, scanning and measurement of the first and second target molecules T1 and T2 may be performed in real time.

In the present disclosure, an electro-optical material may include a light-absorbing material. The light-absorbing material may be a material of which absorption rate is controlled according to wavelengths. The light-absorbing materials may be materials of which light refractive indexes according to wavelengths may be changed, according to absorption rates according to wavelengths. For example, the light-absorbing materials may include 2D materials, but embodiments are not limited thereto. Accordingly, it will be understood by those skilled in the art to which the present disclosure belongs, that embodiments of the present disclosure can be embodiment by replacing an electro-optical material with a light-absorbing material.

The description of the present disclosure described above is for an example, and it will be understood by those skilled in the art in the technical field to which the present disclosure belongs, that the description can be easily transformed in other concrete forms without changing the technical ideas or essential characteristics of the present disclosure. Thus, it should be understood that the above-described embodiments are illustrative and are not limited in all aspects. For example, each component described in a single type may be dispersed and performed, and the components that are described as dispersed in the same way may also be carried out in a combined form.

According to the embodiments provided by the present disclosure, a laser that can be replaced or controlled in the wavelength band is required to change the wavelength band of a dispersive wave.

In addition, the wavelength band of the dispersive wave can be changed in real time. That is, the center wavelength of the dispersive wave can be changed in real time.

In addition, an electro-optical device, a laser device, and an electro-optical dual-comb geneator according to embodiments of the present disclosure may be manufactured in a small size.

The effects that can be obtained from the exemplary embodiments of the present disclosure are not limited to the effects mentioned above, and other effects that are not mentioned can be clearly derived and understood by those skilled in the art in the technical field to which the embodiments of the present disclosure belong, from the description of the exemplary embodiments of the present disclosure. In other words, the unintentional effects of exemplary embodiments of the present disclosure can also be derived by those skilled in the art from the exemplary embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. An electro-optical device comprising:
a waveguide configured to generate a dispersive wave of which a center wavelength is different from a center wavelength of an incident wave of the waveguide; and
a wavelength modulator disposed along the waveguide and configured to absorb the incident wave propagating through the waveguide,
wherein, as the wavelength modulator absorbs the incident wave, the center wavelength of the dispersive wave changes.

2. The electro-optical device of claim 1, wherein the wavelength modulator is configured to absorb the incident wave at a controllable absorption rate.

3. The electro-optical device of claim 2, wherein the controllable absorption rate of the wavelength modulator is controlled based on a voltage applied to the wavelength modulator.

4. The electro-optical device of claim 2, wherein a dispersion profile of the waveguide changes according to the controllable absorption rate of the wavelength modulator.

5. The electro-optical device of claim 3, wherein, as the controllable absorption rate of the wavelength modulator changes, a refractive index of the waveguide changes, and, as the refractive index of the waveguide changes, the dispersion profile of the waveguide changes.

6. The electro-optical device of claim 1, wherein a dispersion profile of the waveguide changes according to a voltage applied to the wavelength modulator.

7. The electro-optical device of claim 1, wherein the waveguide is configured to generate the dispersive wave in a nonlinear process based on the dispersion profile of the waveguide.

8. The electro-optical device of claim 1, wherein the wavelength modulator is configured to absorb a part of the incident wave.

9. The electro-optical device of claim 1, wherein the wavelength modulator comprises an electro-optical material layer disposed along the waveguide, and electrodes electrically connected to the electro-optical material layer.

10. The electro-optical device of claim 9, wherein the electro-optical material layer comprises an electro-optical material for absorbing the incident wave propagating through the waveguide.

11. The electro-optical device of claim 10, wherein the electro-optical material comprises at least one of graphene, black phosphorous, molybdenum disulfide (MoS2), and metalloid.

12. The electro-optical device of claim 10, wherein a length at which the electro-optical material layer extends in a longitudinal direction of the waveguide, is shorter than a length of the waveguide.

13. A laser device comprising:
a pulse laser source configured to emit a pulse wave;
a waveguide configured to receive the pulse wave as an incident wave and to generate a dispersive wave of which a center wavelength is different from a center wavelength of the incident wave; and
a wavelength modulator disposed along the waveguide and configured to absorb the incident wave propagating through the waveguide,
wherein, as the wavelength modulator absorbs the incident wave, the center wavelength of the dispersive wave changes.

14. The laser device of claim 13, wherein the pulse laser source is configured to generate the pulse wave from a continuous pump wave.

15. An electro-optical dual-comb generator comprising:
a first laser device configured to generate a first dispersive wave; and
a second laser device configured to generate a second dispersive wave,
wherein the first laser device comprises:
a first pulse laser source configured to emit a first pulse wave in a first time period;
a first waveguide configured to receive the first pulse wave as a first incident wave and to generate the first dispersive wave of which a center wavelength is different from a center wavelength of the first incident wave; and
a first wavelength modulator disposed along the first waveguide and configured to absorb the first incident wave propagating through the first waveguide, and
the second laser device comprises:
a second pulse laser source configured to emit a second pulse wave in a second time period;
a second waveguide configured to receive the second pulse wave as a second incident wave and to generate the second dispersive wave of which a center wavelength is different from a center wavelength of the second incident wave; and
a second wavelength modulator disposed along the second waveguide and configured to absorb the second incident wave propagating through the second waveguide, and
, as the first wavelength modulator absorbs the first incident wave, a center wavelength of the first dispersive wave changes, and
, as the second wavelength modulator absorbs the second incident wave, a center wavelength of the second dispersive wave changes.
